# EUROPÄISCHE PATENTSCHRIFT

(11) **EP 3 108 559 B1**
(45) Veröffentlichungstag und Bekanntmachung des Hinweises auf die Patenterteilung: **14.08.2019**
(21) Anmeldenummer: 15700595.0
(22) Anmeldetag: 20.01.2015
(51) Int. Cl.: H02H 3/20, H02H 5/04, H02H 9/02, H02H 9/04

(54) **ÜBERSPANNUNGSSCHUTZVORRICHTUNG MIT LECKSTROMABSCHALTUNG**
OVERVOLTAGE PROTECTION DEVICE WITH LEAKAGE CURRENT CUTOFF
DISPOSITIF DE PROTECTION CONTRE LES SURTENSIONS AVEC COUPURE DES COURANTS DE FUITE

(30) Priorität: 17.02.2014 DE 102014202880
(43) Veröffentlichungstag der Anmeldung: 28.12.2016
(73) Patentinhaber: Phoenix Contact GmbH & Co. KG, 32825 Blomberg (DE)
(72) Erfinder: STRIEWE, Martin, 32805 Horn-Bad Meinberg (DE); WOSGIEN, Joachim, 32584 Löhe (DE)
(74) Vertreter: RCD Patent Giesen, Schmelcher & Griebel Patentwanwälte PartG mbB
(86) Internationale Anmeldenummer: PCT/EP2015/050924
(87) Internationale Veröffentlichungsnummer: WO 2015/121027

(56) Entgegenhaltungen:
- EP-A1- 1 826 780
- DE-A1- 4 124 321
- DE-A1- 10 116 172
- DE-A1- 10 211 795

## Beschreibung

Die Erfindung betrifft eine Überspannungsschutzvorrichtung mit Leckstromabschaltung. Überspannungsschutzeinrichtungen verschiedenster Art weisen in Folge von Alterung und/oder Betrieb außerhalb der spezifizierten Betriebsspannungen unerwünschte Leckströme auf.

Diese Leckströme führen zum einen zu höheren Energiekosten zum anderen führen diese Leckströme auch zu einer Erwärmung der betreffenden Überspannungsschutzeinrichtung. Diese Erwärmung kann dabei so umfangreich sein, dass es zu weiterer Beschädigung oder Zerstörung der Überspannungsschutzeinrichtung selbst als auch umgebender Bauteile führen kann und sogar Brände auslösen kann.

Um diesen negativen Effekten zu begegnen, wurden in der Vergangenheit unterschiedliche Anordnungen vorgeschlagen mit denen eine derartig fehlfunktionierende Überspannungsschutzeinrichtung vom versorgenden Netz abgetrennt werden soll, um so eine unzulässige Erwärmung oder Zerstörung der Überspannungsschutzeinrichtung zu verhindern.

Eine bekannte Maßnahme ist z.B. eine thermisch erweichbare Verbindung, z.B. eine Lötstelle, vorzusehen, die bei Erreichen der Erweichungstemperatur eine Verbindung zur Überspannungsschutzeinrichtung löst.

Andere Maßnahmen sehen die Verwendung von Parallelschaltungen vor, wobei der Leckstrom über einen zumindest mit einer parasitären Induktivität behafteten Pfad geführt wird, während ein Überspannungsereignis über eine hierzu parallelen gasgefüllten Überspannungsableiter geführt wird.

Beispielhaft für diese Maßnahmen sei auf die DE 41 24 321 A1, DE 102 11 795 A1, EP 1 926 799 A1 und die DE 101 16 172 A1 verwiesen, wobei die DE 41 24 321 A1 den Oberbegriff des unabhängigen Anspruchs formt.

Obwohl diese Maßnahmen erfolgreich eingesetzt werden können, kann mit diesen nicht das Spektrum von Überspannungsschutzeinrichtungen und Ihrer Verwendung vollständig abgedeckt werden.

Insbesondere für Gleichspannungsnetze, auch als DC-Netze bezeichnet, wie sie z.B. bei Solaranlagen vorzufinden sind, oder aber bei sehr leistungsstarken Wechselspannungsnetzen, auch als AC-Netze bezeichnet, , stellt die Fähigkeit der Abtrennung eine große Hürde dar.

Während für geringe DC-Ströme (d.h. Nennströme der Sicherung) noch geeignete Trennelemente (z.B. Schmelzsicherungen) existieren, welche in der Lage sind, den Stromfluss, auch bei einem hohen prospektiven Kurzschlussstrom des Stromzweiges, zu unterbrechen, steigt der Aufwand, welcher zum Erreichen eines solchen Löschvermögens getrieben werden muss, bei höheren Strömen (Nennströmen der Sicherung) stark an. Dieser Aufwand ist neben den technischen Herausforderungen auch ein Kostentreiber, sodass die entsprechenden Schaltvorrichtungen insgesamt sehr teuer sind.

Gleichzeitig muss eine Sicherung, welche in Serie zu einem Überspannungsableiter angeordnet wird, in der Lage sein den betriebsmäßig über den Überspannungsableiter fließenden (Impuls-) Strom zu tragen.

Der Erfindung liegt die Aufgabe zu Grunde, eine Überspannungsschutzvorrichtung mit Leckstromabschaltung bereitzustellen, die auch bei hohen Strömen als auch bei DC-Netzen eine zuverlässige Abschaltung bereitstellen.

Diese Aufgabe wird durch eine Überspannungsschutzvorrichtung gemäß Anspruch 1 gelöst. Diese Überspannungsschutzvorrichtung mit Leckstromabschaltung weist eine Parallelschaltung eines ersten Stromzweiges und eines zweiten Stromzweiges auf, wobei der erste Stromzweig ein Schaltelement und ein erstes nichtlineares Widerstandselement aufweist, und wobei der zweite Stromzweig ein Sicherungselement mit Meldeeigenschaft und ein zweites nichtlineares Widerstandselement sowie einen komplexen Widerstand aufweist, wobei abhängig von einer Zustandsänderung des Sicherungselements mit Meldeeigenschaft das Schaltelement zum Schalten veranlasst wird, gelöst.

Vorteilhafte Weiterbildungen sind auch Gegenstand der abhängigen Ansprüche.

Nachfolgend wird die Erfindung unter Bezugnahme auf die anliegenden Zeichnungen anhand bevorzugter Ausführungsformen näher erläutert.

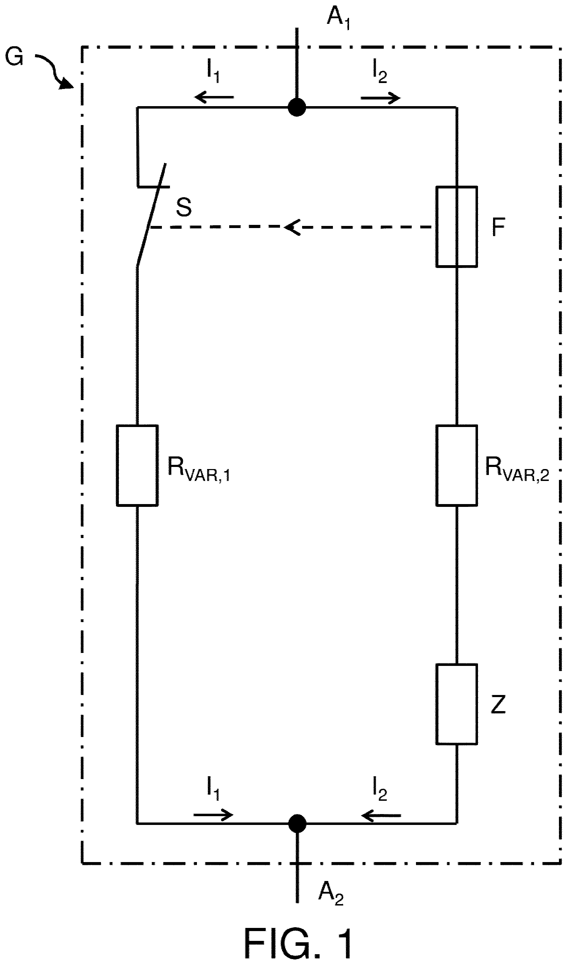

Es zeigt
Figur 1 eine beispielhafte schematische Darstellung von Ausführungsformen der Erfindung.

Figur 1 zeigt eine beispielhafte schematische Darstellung von Ausführungsformen der Überspannungsschutzvorrichtung mit Leckstromabschaltung. Diese weist eine Parallelschaltung eines ersten Stromzweiges I₁ und eines zweiten Stromzweiges I₂ auf.

Der erste Stromzweig I₁ weist ein Schaltelement S und ein erstes nichtlineares Widerstandselement R_{var,1} auf. Der zweite Stromzweig I₂ weist ein Sicherungselement mit Meldeeigenschaft F und ein zweites nichtlineares Widerstandselement R_{var,2} sowie einen komplexen Widerstand Z auf.

Dabei sind das Schaltelement S und das Sicherungselement mit Meldeeigenschaft F so miteinander in Zusammenwirkung gebracht, dass abhängig von einer Zustandsänderung des Sicherungselements mit Meldeeigenschaft F das Schaltelement S zum Schalten veranlasst wird.

Hierdurch kann, wie nachfolgend erläutert, ein sicheres Abschalten gewährleistet werden.

Im ersten Stromzweig I₁ des Überspannungsschutzvorrichtung befindet sich ein Widerstandselement R_{var,1} mit nicht-linearer Strom/Spannungs-Kennlinie, welches bezüglich seines Ableitvermögens so bemessen ist, dass es das erforderliche Ableitvermögen der Anordnung im Wesentlichen tragen kann. In Serie hierzu ist ein Schaltelement S angeordnet, welches bezüglich seiner Stoßstromtragfähigkeit dem Ableitvermögen des R_{var,1} im Wesentlichen entspricht. Das (DC-) Abschaltvermögen des Schaltelements S braucht jedoch nur gering ausgeprägt zu sein, wodurch kostengünstige und einfache Schaltelemente verwendet werden können.

Im zweiten Stromzweig I₂, befindet sich ebenfalls ein Widerstandselement R_{var,2} mit nicht-linearer Strom/Spannungs-Kennlinie, welches bezüglich seines Ableitvermögens so bemessen sein kann, dass es lediglich einen gegenüber dem Ableitstrom des ersten Stromzweiges I₁ deutlich geringeren Teilstrom I₂ zu tragen vermag.

Hinsichtlich ihrer Spannungsbemessung (z.B. Uv, Spannungsabfall bei einem eingeprägten Strom von 1 mA) sind R_{var,1} und R_{var,2} im Wesentlichen gleich bemessen, wobei bei einer unterschiedlichen Ausgestaltung zumindest R_{var,2} eine geringfügig geringere charakteristische Spannung (z.B. Varistor-Spannung) bei gleichem eingeprägtem Strom aufweisen kann.

Das geringere Ableitstromtragvermögen des R_{var,2} gegenüber dem R_{var,1} drückt sich hinsichtlich der Strom/Spannungs-Kennlinie des R_{var,2} durch eine größere Steilheit im Vergleich zur Strom/Spannungs-Kennlinie des R_{var,1} aus.

In Serie mit R_{var,2} befindet sich in dem zweiten Stromzweig I₂ ein Sicherungselement mit Meldeeigenschaft F, beispielsweise eine Schmelzsicherung mit Kennmelder, welches hinsichtlich seiner Stoßstromtragfähigkeit auf den im Ableitfall über den zweiten Stromzweig I₂ fließenden Teilstrom I₂ ausgelegt sein kann, welcher deutlich geringer ist, als der Stoßstromanteil des ersten Stromzweiges I₁.

Als weiteres Element befindet sich im zweiten Stromzweig I₂ der komplexe Widerstand Z, welcher entweder aus parasitären oder konkreten Elementen gebildet wird.

Die steilere Kennlinie des R_{var,2} im Vergleich zum R_{var,1} in Verbindung mit Z führt dazu, dass im Ableitfall der Hauptanteil des Ableitstromes durch den ersten Stromzweig I₁ fließt, während ein deutlich geringerer Anteil über den zweiten Stromzweig I₂ fließt, welcher das Sicherungselement mit Meldeeigenschaft F nicht zum Ansprechen bringt.

Wird an die Gesamtanordnung über die Anschlüsse A₁, A₂ eine Spannung angelegt, welche zu einem (Leck-)Stromfluss über den ersten Stromzweig I₁ und den zweiten Stromzweig I₂ führt, so wird über den zweiten Stromzweig I₂ ein im Vergleich zum Ableitfall, größerer Stromanteil fließen, da die Kennlinie des R_{var,2} im unteren (Leck-) Strombereich relativ flach verläuft. Dieser Stromfluss bringt R_{var,2} zum Durchlegieren, was dessen Impedanz zusammenbrechen lässt und den Stromfluss im zweiten Stromzweig I₂ deutlich weiter ansteigen lässt.

Der Stromfluss durch den zweiten Stromzweig I₂ bringt das Sicherungselement mit Meldeeigenschaft F zum Ansprechen. Das Sicherungselement mit Meldeeigenschaft F unterbricht durch ihr Löschvermögen den Stromfluss im zweiten Stromzweig I₂. Der Kennmelder des Sicherungselements mit Meldeeigenschaft F löst die Betätigung des Schaltelements S aus, was den Stromfluss sodann auch im ersten Stromzweig I₁ unterbricht.

Dabei kann die Betätigung z.B. direkt durch eine mechanische Wirkung erzielt werden oder aber indirekt zu einer Betätigung führen. Beispielsweise kann vorgesehen sein, dass ein Kraftspeicher zur Betätigung des Schaltelements S freigegeben wird.

In einer beispielhaften Anordnung, die lediglich der Illustration der Erfindung dient, ist z.B. das erste nichtlineare Widerstandselement R_{var,1} ein Varistor, z.B. der Baugröße 80 mm, mit folgenden Leistungsdaten Vᵣₘₛ=320 V, V_{DC}=420 V, i_{max, 8,20 µs}=100000 A, W_{max, 2ms}=1600 J, Pₘₐₓ=2 W, V_{v,1 mA}=510 V, während das zweite nichtlineare Widerstandselement R_{var,2} ein Varistor, z.B. der Baugröße 14 mm, mit folgenden Leistungsdaten Vᵣₘₛ=320 V, V_{DC}=420 V, i_{max, 8,20 µs}=4500 A, W_{max, 2ms}=84 J, Pₘₐₓ=0.6 W, V_{v,1 mA}=510 V ist.

Wird nun eine (Prüf-)Spannung von 600 V an diese Parallelschaltung zur Simulation eines Leckstromes angelegt, so würde das zweite nichtlineare Widerstandselement R_{var,2} nach circa 1,2 s eine Energie von in etwa 84 J bereits absorbiert haben, sodass mit einem baldigen Durchlegieren des zweite nichtlineare Widerstandselement R_{var,2} zu rechnen ist, während das erste nichtlineare Widerstandselement R_{var,1} nach circa 1,2 s eine Energie von in etwa 968 J bereits absorbiert hätte und somit noch stabil wäre.

Mittels der vorbezeichneten allgemeinen Lösung ist es somit möglich einfache und kostengünstige Überspannungsschutzvorrichtung mit Leckstromabschaltung bereitzustellen, die auch bei hohen Strömen als auch bei DC-Netzen eine zuverlässige Abschaltung bereitstellen.

In einer vorteilhaften Ausgestaltung der Erfindung weist das erste nichtlineare Widerstandselement R_{var,1} und das zweite nichtlineare Widerstandselement R_{var,2} jeweils eine nichtlineare Strom/Spannungskennlinie auf, wobei die Steilheit der Kennlinie des zweiten nichtlinearen Widerstandselements R_{var,2} größer ist als die Steilheit der Kennlinie des ersten nichtlinearen Widerstandselements R_{var,1}.

Hierdurch kann das Schaltverhalten der beiden Stromzweige sehr präzise eingestellt werden und zudem eine Optimierung in Bezug auf die Herstellungskosten vorgenommen werden.

In noch einer weiteren Ausgestaltung weist das erste nichtlineare Widerstandselement R_{var,1} und/oder das das zweite nichtlineare Widerstandselement R_{var,2} einen Varistor auf.

Hierdurch können die guten Spannungsbegrenzungseigenschaften der Varistoren genutzt werden. Zudem können Standardbauelemente kostengünstig verwendet werden.

In noch einer weiteren Ausgestaltung ist das Sicherungselement mit Meldeeigenschaft F eine Kennmeldersicherung.

Hierdurch können die guten Trenneigenschaften von Kennmeldersicherung genutzt werden. Zudem können Standardbauelemente kostengünstig verwendet werden.

In noch einer weiteren Ausgestaltung ist das Stoßstromtragevermögen des ersten Stromzweiges I₁ größer als das Stoßstromtragevermögen des zweiten Stromzweiges I₂. Auch hierdurch können die Kosten einer erfindungsgemäßen Vorrichtung optimiert werden, ohne Abstriche am Schaltvermögen vorzunehmen.

In noch einer weiteren Ausgestaltung wird der komplexe Widerstand Z durch ein oder mehrere konkrete Bauelemente zur Verfügung gestellt. Beispielhafte konkrete Bauelemente sind Widerstände, Spulen als auch Kondensatoren.

Hierdurch wird der zweite Stromzweig filterartig vor einem eher hochfrequenten Impulsstromereignis resultierend aus einem Überspannungsereignis geschützt, dass zuverlässig über den ersten Stromzweig abgeleitet werden kann.

In einer vorteilhaften Ausgestaltung ist die erfindungsgemäße Überspannungsschutzvorrichtung mit Leckstromabschaltung in einem Gehäuse G - dargestellt in Figur 1 durch einen strich-punktierten Rahmen - mit entsprechenden Anschlüssen A₁ und A₂ angeordnet. Hierdurch kann eine besonders einfache Installationsmöglichkeit von vorgefertigten Überspannungsschutzvorrichtungen mit Leckstromabschaltung bereitgestellt werden.

**Bezugszeichenliste**

| | |
|---|---|
| Erster Stromzweig | I₁ |
| Zweiter Stromzweig | I₂ |
| Schaltelement | S |
| Nichtlineares Widerstandselement | R_{var,1}; R_{var,2} |
| Komplexer Widerstand | Z |
| Gehäuse | G |
| Sicherungselement mir Meldeeigenschaft | F |
| Anschlüsse | A₁, A₂ |

## Patentansprüche

1. Überspannungsschutzvorrichtung mit Leckstromabschaltung, aufweisend eine Parallelschaltung eines ersten Stromzweiges (I₁) und eines zweiten Stromzweiges (I₂), wobei der erste Stromzweig (I₁) ein Schaltelement (S) und ein erstes nichtlineares Widerstandselement (R_{var,1}) aufweist, wobei der zweite Stromzweig (I₂) ein Sicherungselement mit Meldeeigenschaft (F) und ein zweites nichtlineares Widerstandselement (R_{var,2}) sowie einen komplexen Widerstand (Z) aufweist, wobei abhängig von einer Zustandsänderung des Sicherungselements mit Meldeeigenschaft (F) das Schaltelement (S) zum Schalten veranlasst wird, wobei das erste nichtlineare Widerstandselement (R_{var,1}) und/oder das zweite nichtlineare Widerstandselement (R_{var,2}) einen Varistor aufweist, und wobei das erste nichtlineare Widerstandselement (R_{var,1}) und das zweite nichtlineare Widerstandselement (R_{var,2}) jeweils eine nichtlineare Strom/Spannungskennlinie aufweisen, **dadurch gekennzeichnet, dass**
die Steilheit der Kennlinie des zweiten nichtlinearen Widerstandselements (R_{var,2}) größer ist als die Steilheit der Kennlinie des ersten nichtlinearen Widerstandselements (R_{var,1}) ist, und wobei das Stoßstromtragevermögen des ersten Stromzweiges (I₁) größer ist als das Stoßstromtragevermögen des zweiten Stromzweiges (I₂).

2. Überspannungsschutzvorrichtung nach einem der vorhergehenden Ansprüche, **dadurch gekennzeichnet, dass** das Sicherungselement mit Meldeeigenschaft (F) eine Kennmeldersicherung ist.

3. Überspannungsschutzvorrichtung nach einem der vorhergehenden Ansprüche, **dadurch gekennzeichnet, dass** der komplexe Widerstand (Z) durch ein oder mehrere konkrete Bauelemente zur Verfügung gestellt wird.

## Claims

1. Overvoltage protection device with leakage current cut-off, comprising a parallel circuit of a first current branch (I₁) and of a second current branch (I₂), wherein the first current branch (I₁) comprises a switch element (S) and a first nonlinear resistive element (R_{var,1}) and wherein the second current branch (I2) comprises a fuse element with a signaling characteristic (F) and a second nonlinear resistive element (Rvar,2) as well as a complex resistor (Z), with the switch element (S) being caused to switch as a function of a state change of the fuse element with the signaling characteristic (F), whereby the first nonlinear resistive element (R_{var,1}) and/or the second nonlinear resistive element (R_{var,2}) comprises a varistor, and whereby the first nonlinear resistive element (R_{var,1}) and the second nonlinear resistive element (Rvar,2) each comprise a nonlinear current-voltage characteristic curve, **characterized in that** the slope of the characteristic curve of the second nonlinear resistive element (R_{var,2}) is greater than the slope of the characteristic curve of the first nonlinear resistive element (R_{var,1}), and whereby the ampacity of the current branch (I₁) is greater than the ampacity of the second current branch (I₂).

2. The overvoltage protection according to one of the preceding claims, **characterized in that** the fuse element with the signaling characteristic (F) is a trip indicator fuse.

3. The overvoltage protection according to one of the preceding claims, **characterized in that** the complex resistor (Z) is made available by one or more specific components.

## Revendications

1. Dispositif de protection contre les surtensions, pourvu d'un circuit parallèle d'une première branche de courant (I₁) et d'une deuxième branche de courant (I₂), la première branche de courant (I₁) comportant un élément de commutation (S) et un premier élément résistif non linéaire (R_{var,1}), la deuxième branche de courant (I₂) comportant un élément de fusible doté d'une fonction de signalisation (F) et un deuxième élément résistif non linéaire (R_{var,2}), ainsi qu'une impédance (Z) complexe, en fonction d'un changement d'état de l'élément de fusible doté d'une fonction de signalisation (F), l'élément de commutation (S) étant incité en commutation, le premier élément résistif non linéaire (R_{var,1}) et/ou le deuxième élément résistif non linéaire (R_{var,2}) comportant un variateur et le premier élément résistif non linéaire (R_{var,1}) et le deuxième élément résistif non linéaire (R_{var,2}) comportant chacun une courbe caractéristique de courant non linéaire, **caractérisé en ce que** la pente de la courbe caractéristique du deuxième élément résistif non linéaire (R_{var,2}) est supérieure à la pente de la courbe caractéristique du premier élément résistif non linéaire (R_{var,1}) et la capacité de tolérance des courants de choc de la première branche de courant (I₁) est supérieure à la capacité de tolérance des courants de choc de la deuxième branche de courant (I₂).

2. Dispositif de protection contre les surtensions selon la revendication précédente, **caractérisé en ce que** l'élément de fusible doté d'une fonction de signalisation (F) est un fusible avertisseur.

3. Dispositif de protection contre les surtensions selon l'une quelconque des revendications précédentes, **caractérisé en ce que** l'impédance (Z) complexe est mise à disposition par un ou plusieurs éléments constitutifs concrets.
